# EUROPÄISCHE PATENTSCHRIFT

(11) **EP 0 508 321 B1**
(45) Veröffentlichungstag und Bekanntmachung des Hinweises auf die Patenterteilung: **15.05.1996**
(21) Anmeldenummer: 92105792.3
(22) Anmeldetag: 03.04.1992
(51) Int. Cl.: H02G 15/10, H02G 15/24, H02G 15/103

(54) **Verbindungsmuffe**
Cable splice sleeve
Manchon de jonction

(30) Priorität: 08.04.1991 DE 4111235
(43) Veröffentlichungstag der Anmeldung: 14.10.1992
(73) Patentinhaber: ABB PATENT GmbH, D-68309 Mannheim (DE)
(72) Erfinder: Kurz, Adolf, W-6836 Oftersheim (DE); Fenske, Dietmar, W-6800 Mannheim 61 (DE); Leonhardt, Gottfried, W-6836 Oftersheim (DE)
(74) Vertreter: Rupprecht, Klaus, Dipl.-Ing.

(56) Entgegenhaltungen:
- EP-A- 0 080 016
- DE-A- 1 908 996
- DE-A- 2 456 471
- DE-A- 2 601 545
- DE-A- 2 733 815
- DE-A- 3 437 481
- DE-A- 3 910 833
- FR-A- 2 373 903
- FR-A- 2 557 390
- Kabeldon, Catalogue Part 2: Cable terminations and joints, 12-36 kV April, 1990

## Beschreibung

Die Erfindung betrifft eine Verbindungsmuffe der im Oberbegriff des Anspruches 1 genannten Art.

Zur Verbindung von zwei Massekabeln oder eines Massekabels mit einem Kunststoffkabel verwendet man Verbindungsmuffen, die in der Regel als sogenannte "nasse" Muffen hergestellt werden. Hierbei ist die Verbindungsmuffe mit einem Massereservoir versehen, das ein Nachtränken des Massekabels im Muffennahbereich gewährleistet.

Zur Abdichtung des in der Regel rohrförmigen Muffenmantels werden hauptsächlich gelötete Konstruktionen in Form einer sogenannten Schmierplombe eingesetzt. Außer diesen Dichtungen sind noch Gummidichtungen mit Federpaketen bekannt, wie sie z.B. im Catalogue part 2 von Kabeldon "Cable terminations and joints 12 bis 36 kV", April 1990, auf den Seiten 2:38 und 2:39 dargestellt sind. Hierbei wird ein zwischen zwei Preßringen liegender gummielastischer Dichtungsring über das Kabel bis in den Muffenmantel hineingeschoben und durch Zusammenpressen der beiden Preßringe so verformt, daß die verursachte Materialverdrängung einen abdichtenden Druck sowohl auf die Innenseite des Muffenmantels als auch auf die Außenseite des Kabels bewirkt.

Verbindungsmuffen mit Schmierplomben als Abdichtung haben den Nachteil, daß speziell geschultes Personal für die Montage eingesetzt werden muß. Außerdem ist das Löten sehr zeitaufwendig. Für Gummidichtungen der beschriebenen Art werden sehr viele Einzelteile benötigt, was entsprechende Montagezeiten verursacht und sich im Materialpreis niederschlägt.

Aufgabe der Erfindung ist es, eine Übergangsmuffe der im Oberbegriff des Anspruches 1 genannten Art zu schaffen, bei der die Abdichtung vereinfacht ist.

Diese Aufgabe wird durch die im Anspruch 1 gekennzeichneten Merkmale gelöst. Zweckmäßige Ausgestaltungen und Weiterbildungen des Erfindungsgegenstandes sind in den abhängigen Ansprüchen genannt.

Die erfindungsgemäße Lösung hat gegenüber Schmierplomben den Vorteil, daß ein vorgefertigtes auf das Massekabel aufschiebbares Dichtungsteil zur Anwendung gelangt. Gegenüber Gummidichtungen mit Federpaketen ist das Dichtungsteil wesentlich einfacher aufgebaut und besonders leicht zu montieren. Die besondere Ausbildung des Dichtungsteils mit Dichtlippen, die einerseits am Metallmantel des Kabels und andererseits an der Innenseite des Muffenmantels dichtend anliegen, sorgt für eine automatische Anpassung an die Druckverhältnisse innerhalb des Massereservoirs. Der von der Masse ausgeübte radiale Druck sorgt dafür, daß die Dichtlippen entsprechend fest angepreßt werden. Ein axiales Herausdrücken der Dichtung aus dem Muffenmantel wird durch eine Befestigung des in das Dichtungsteil eingegossenen Halterings am Muffenmantel verhindert.

Ein zweckmäßige Ausbildung des Erfindungsgegenstandes sieht vor, daß die beiden Dichtlippen im Querschnitt ein mit seiner Öffnung dem Massereservoir zugewandtes V bilden und das Dichtungsteil außen, zum Muffenende hin, konisch abgeschrägt ist. Hierdurch erhält das Dichtungsteil eine an die rohrförmige Muffe angepaßte besonders günstige Form.

Die Abdichtung im Bereich des Metallmantels des Massekabels wird maßgeblich dadurch verbessert, daß der Innendurchmesser des Dichtungsteils kleiner als der Außendurchmesser des Metallmantels dimensioniert wird.

Mit Hilfe eines zusätzlich als Dichtungsteil wirkenden Isolierkörpers gelingt eine besonders vorteilhafte Weiterbildung des Erfindungsgegenstandes, da die üblicherweise benötigte, aufwendig herzustellende Wickelkeule durch ein rohrförmiges, auf den Kabelverbinder aufschiebbares, vorgefertigte Teil ersetzt wird. Durch die besondere Ausbildung des Isolierkörpers und seine gummielastische Flexibilität gelingt es das Massereservoir sowohl gegenüber dem Kunststoffkabel als auch nach außen hin abzudichten. Eine spezielle Dimensionierung des Isolierkörpers gewährleistet, daß auf der Seite des Massekabels ein Nachtränken der Ader des Massekabels erfolgt.

Die Muffe verbindet somit die Vorteile der Aufschiebtechnik, wie sie im Bereich der Kunststoffkabelgarnituren bekannt sind, mit den Erfordernissen einer Massekabelgarnitur, bei der ein Nachtränken der Kabelader notwendig ist.

Eine zweckmäßige Weiterbildung des aus elastomerem Material bestehenden rohrförmigen Isolierkörpers sieht vor, daß sein Innendurchmesser kleiner als der Außendurchmesser der Isolierung des Massekabels auf der einen Seite und des Kunststoffkabels auf der anderen Seite ist, wodurch Hohlräume vermieden und damit eine ausreichende elektrische Festigkeit gewährleistet wird. Beim Aufschieben erfolgt eine Spreizung, die bewirkt, daß der Isolierkörper den Kabelverbinder im Preßsitz umschließt und dadurch für eine sichere Abdichtung zum Kunststoffkabel hin sorgt. Für die Abdichtung zur Außenseite am Muffenende dient eine Dichtlippe, die am Muffenmantel innen anliegt.

Zweckmäßigerweise dient als Kabelverbinder zum Verbinden der Leiter der beiden Kabel ein erster Preßverbinder, der mit Sacklochbohrungen versehen ist und einen Preßverbindersteg besitzt, dessen Außendurchmesser größer ist als der des übrigen Preßverbinders, so daß an dieser Stelle ein erhöhter Druck auf den Isolierkörper ausgeübt wird und sich dadurch die Abdichtung weiter verbessert.

Eine weitere wesentliche Verbesserung wird dadurch erzielt, daß eine zur Glättung der Oberfläche des Preßverbinders über diesen zu schiebende Glättungselektrode unmittelbar in den Isolierkörper integriert ist, so daß keine getrennte Montage erforderlich wird. An seinem kabelseitigen Ende ebenfalls in den Isolierkörper integriert, ist ein Steuertrichter, der eine Kontaktierung mit der Schirmung des Kabels ermöglichen soll.

Um eine ausreichende Tränkung des Massekabels sicherzustellen, endet der Isolierkörper zum Massekabel hin auf der freigelegten Papierisolierung etwa in der Mitte zwischen einer ersten Absetzkante einer Feldbegrenzung des Massekabels und einer am Ende der Papierisolierung des Massekabels gebildeten zweiten Absetzkante. Weiterhin ist das Ende des Isolierkörpers konisch abgeschrägt, wodurch das Aufbringen eines Wickelpapiers sehr erleichtert wird. So kann ein Papierband in vorgegebener Breite, vorzugsweise zwischen 20 mm und 100 mm, Lage auf Lage unmittelbar gegen das Ende des konisch abgeschrägten Isolierkörpers gewickelt werden. Dies ist selbstverständlich wesentlich einfacher und auch zeitsparender als die Erstellung einer Wickelkeule.

Eine vorteilhafte Weiterbildung der Erfindung sieht weiterhin vor, daß der Außendurchmesser des Isolierkörpers bis zu einer Dichtlippe wesentlich kleiner als der Innendurchmesser des Muffenmantels ist. So kann sich das Massereservoir bis in diesen Bereich erstrecken und eine äußere Feldbegrenzung vom Metallmantel des Massekabels bis unter die Dichtlippe des Isolierkörpers geführt werden.

Der Muffenmantel wird zweckmäßigerweise durch ein Metallrohr, vorzugsweise aus Kupfer gebildet, und besitzt im Bereich des Massereservoirs eine Einfüllöffnung für die Masse.

Ohne Potentialtrennung wird das Erdpotential vom Metallmantel des Massekabels über eine erste Flachlitze mit dem Muffenmantel verbunden und von diesem über eine zweite Flachlitze zu einem zweiten Preßverbinder geführt und an die Schirmdrähte des Kunststoffkabels angeschlossen. Bei Potentialtrennung wird die zweite Flachlitze durch einen dritten Preßverbinder mit einer ersten isolierten Erdungslitze und die Schirmdrähte durch einen vierten Preßverbinder mit einer zweiten isolierten Erdungslitze verbunden. Die beiden Erdungslitzen können zu einem Erdungskasten geführt werden, wo dann das Erdpotential bei Bedarf durchverbunden oder zur Mantelprüfung getrennt werden kann.

Um eine geeignete Flexibilität der beiden dichtenden Teile zu erreichen, werden diese aus einem elastomeren Material einer Shore-A-Härte zwischen 25 und 55 hergestellt. Hierzu verwendet man üblicherweise einen entsprechenden Silikonkautschuk. Die Dehnung der Teile, insbesondere des Isolierkörpers, wird so dimensioniert, daß sie zwischen 5 und 30 % liegt.

Der Muffenmantel, der freiliegende Bereich der beiden Dichtungsteile und die Anschlußenden der beiden zu verbindenden Kabel werden mit einem Schrumpfschlauch abgedeckt. Zur Verbindung von mehradrigen Kabeln, insbesondere Dreileiterkabeln wird jede der Kabeladern mit einer Verbindungsmuffe versehen, wie sie vorstehend beschrieben wurde.

Ein Ausführungsbeispiel der Erfindung wird im folgenden näher beschrieben und ist in den Zeichnungen dargestellt.

Es zeigen:
- Fig. 1: eine teilweise aufgeschnittene Muffe in Seitenansicht mit den beiden Anschlußenden der zu verbindenden Kabel,
- Fig. 2: das Herausführen von zwei Erdungslitzen aus der Muffe bei Potentialtrennung,
- Fig. 3: das Einführen von drei Adern eines mehradrigen Kabels in drei ihnen zugeordnete Übergangsmuffen.

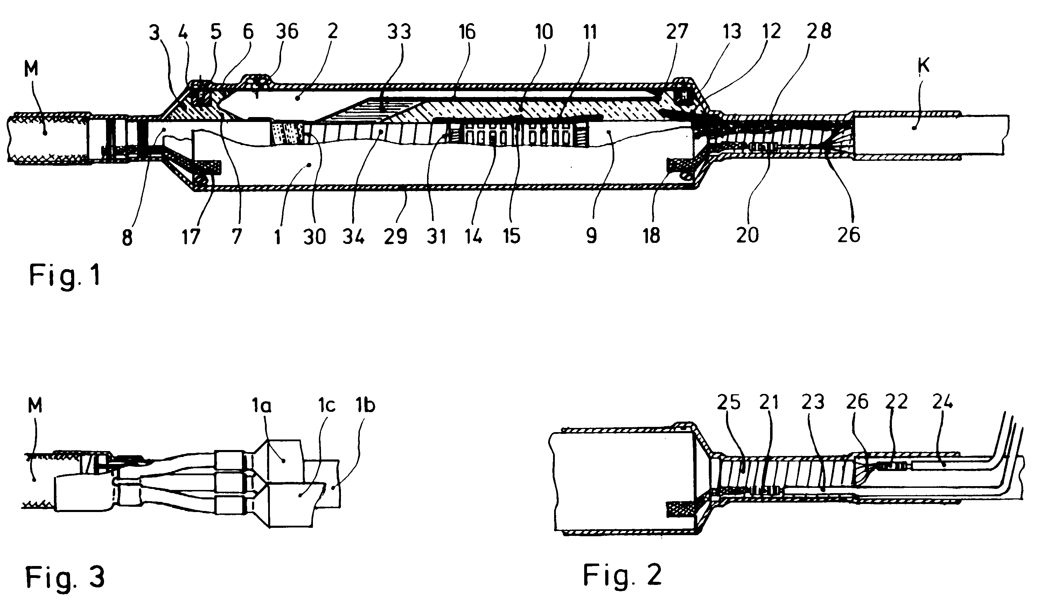

Wie Fig. 1 zeigt, dient eine Verbindungsmuffe mit einem Muffenmantel 1 zum Verbinden eines Massekabels M mit einem Kunststoffkabel K. Die bis auf den Leiter abisolierten Kabel werden innerhalb des Muffenmantels 1 durch einen ersten Preßverbinder 14 elektrisch und mechanisch verbunden. Die Abdichtung des als Kupferrohr ausgebildeten Muffenmantels 1 auf der Massekabelseite wird mit einem Dichtungsteil 3 erreicht. Hierzu wird das Dichtungsteil 3 auf den Metallmantel 8 des Massekabels geschoben. Auf der Seite des Kunststoffkabels K wird ein ebenfalls eine Abdichtung bewirkender Isolierkörper 10 über den ersten Preßverbinder 14 hinweg aufgeschoben. Zwischen dem Dichtungsteil 3 und dem Isolierkörper 10 verbleibt ein Hohlraum, der als Massereservoir 2 zur Aufnahme von Masse für die Tränkung des Massekabels M dient. Für das Einfüllen der Masse ist eine Einfüllöffnung 36 im Muffenmantel 1 vorgesehen.

Auf seiner dem Massereservoir 2 zugewandten Innenseite besitzt das Dichtungsteil 3 zwei Dichtungslippen 6,7, von denen eine äußere Dichtungslippe 6 auf der Innenseite des Muffenmantels und eine innere Dichtungslippe 7 auf dem Metallmantel 8 des Massekabels M anliegt. Durch die Formgebung der angegossenen Dichtlippen 6,7, die im Querschnitt zusammen einem V entsprechen, das sich zum Massereservoir 2 hin öffnet, wird erreicht, daß ein von der Masse ausgeübter Innendruck, die Dichtlippen 6,7 in radialer Richtung gegen ihre Auflage drückt. Hierdurch wird eine zuverlässige Dichtwirkung erzielt.

Um ein Verschieben des Dichtungsteiles 3 auf dem Metallmantel 8 bzw. gegenüber dem Muffenmantel 1 zu verhindern, ist ein erster Haltering 4 in das Dichtungsteil 3 eingegossen und vorzugsweise mit Schrauben 5 am Muffenmantel 1 angeschraubt. Eine durch steigenden Innendruck in axialer Richtung wirkende Kraftkomponente drückt das Dichtungsteil 3 gegen den aus Aluminium hergestellten ersten Haltering 4, der durch seine Fixierung ein Verschieben verhindert. Zur Außenseite hin ist das Dichtungsteil 3 konisch abgeschrägt.

Der Isolierkörper 10 ersetzt weitgehend die bisher übliche Wickelkeule für die elektrische Isolierung des Preßverbinders 14. In den vorzugsweise aus Silikonkautschuk bestehenden Isolierkörper 10 sind eine aus leitfähigem Silikonmaterial bestehende Glättungselektrode 11 und ein Steuertrichter 12 sowie ein zur Fixierung des Isolierkörpers 10 am Muffenmantel 1 benötigter zweiter Haltering 13 mit eingegossen. Der Isolierkörper 10 vereinigt somit mehrere Teile und läßt sich bei der Montage leicht aufschieben. Hierdurch wird die Montagezeit entscheidend verkürzt.

Der Preßverbinder 14 ist in seiner Mitte mit einem Preßverbindersteg 15 versehen, auf dem die Glättungselektrode 11 mit Vorspannung aufliegt und dadurch die Masse gegenüber dem Kunststoffkabel K abdichtet. Steigt der Druck der Masse an, wird durch die radiale Kraftkomponente auf den Isolierkörper 10 der Druck auf den Preßverbindersteg 15 erhöht und somit eine Massewanderung entlang dem Preßverbinder 14 zum Kunststoffkabel K hin sicher verhindert.

Analog zum Dichtungsteil 3 auf der Massekabelseite ist der Isolierkörper 10 auf der Kunststoffkabelseite mit einer der äußeren Dichtlippe 6 entsprechenden Isolierkörperdichtlippe 27 versehen, die ebenfalls so geformt ist, daß sie bei steigendem Innendruck radial an die Innenseite des Muffenmantels 1 gepreßt wird.

Der Isolierkörper 10 endet auf der freigelegten Aderisolierung etwa in der Mitte zwischen einer zweiten Absetzkante 31 der Isolierung und einer ersten Absetzkante 30 der äußeren Feldbegrenzung des Massekabels M. Somit bleibt zwischen der ersten Absetzkante 30 und dem Isolierkörper 10 ein Sickerbereich frei, der ein Nachtränken der Papierisolierung 34 des Massekabels M ermöglicht.

Das Ende des Isolierteils 10 ist so angeschrägt, daß mit einem Wickelpapier einer Breite zwischen 20 mm und 100 mm durch einfaches Anwickeln ein zur Steuerung des elektrischen Feldes an der Absetzkante der äußeren Feldbegrenzung ein Papierwickel 33 mit geeignetem Konus entsteht. Zur äußeren Feldbegrenzung 16 dient vorzugsweise leitfähiges Kreppapier, das ausgehend vom Metallmantel 8 des Massekabels M über den Papierwickel 33 bis zur Isolierkörperdichtlippe 27 gewickelt wird.

Die beiden Dichtungselemente 3,10 sind aus elastomerem Material, vorzugsweise aus Silikonkautschuk einer Shore-A-Härte zwischen 25 bis 55 hergestellt. Der Durchmesser der Innenbohrung des Dichtungsteils 3 ist kleiner als der Durchmesser der Kabelader über dem Metallmantel. Aufgrund dieser Durchmesserdifferenz übt der elastomere Körper einen dauerhaften radialen Druck auf den Metallmantel aus. Die Durchmesserdifferenz ist so gewählt, daß die Dehnung des Abdichtelementes zwischen 5 und 30 % liegt.

Sofern keine Potentialtrennung zwischen den beiden Kabeln vorgesehen ist, wird das Erdpotential vom Metallmantel 8 über eine erste Flachlitze 17 mit dem Muffenmantel 1 verbunden, der wiederum über eine zweite Flachlitze 18 und einen zweiten Preßverbinder 20 zu den Schirmdrähten 26 des Kunststoffkabels K durchverbunden ist.

Fig. 2 zeigt eine Übergangsmuffe mit Potentialtrennung. Hier wird das Erdpotential des Massekabels vom Metallmantel 8 über die erste Erdungslitze 17, den Muffenmantel 1, die zweite Erdungslitze 18, einen dritten Preßverbinder 21 zu einer ersten isolierten Erdungslitze 23 und mit dieser nach außen geführt. Das Erdpotential der Kunststoffkabelseite wird von Schirmdrähten 26 über einen vierten Preßverbinder 22 und eine zweite isolierte Erdungslitze 24 ebenfalls nach außen geführt. Im Erdungskasten kann dann das Erdpotential durchverbunden und bei Mantelprüfungen der Kabel getrennt werden. Die Potentialtrennung erfolgt innerhalb der Muffe, in der die aus leitfähigem Kreppapier bestehende äußere Feldbegrenzung 16 unter der Isolierkörperdichtlippe 27 endet. Das Potential des Massekabels reicht also bis zum Muffenmantel 1 und unter die Dichtlippe 27. Die Trennung wird durch den Isolierkörper 10 und die Bewicklung aus Isolierband 25 auf der festverschweißten Leitschicht 28 des Kunststoffkabels K erreicht. Über die Muffe und die beiden Anschlußenden der Kabel M,K ist ein Schrumpfschlauch 29 gezogen, der die Anordnung schützt.

Fig. 3 zeigt die Zuführung eines dreiadrigen Massekabels M zu drei jeweils einer Ader zugeordneten Muffen 1a,1b,1c, die auf ihrer anderen nicht dargestellten Seite wiederum mit drei Adern eines Kunststoffkabels verbunden sind.

## Patentansprüche

1. Verbindungsmuffe zur Verbindung zweier Massekabel oder eines Massekabels (M) mit einem Kunststoffkabel (K), bei der ein Muffenmantel (1) mindestens einen entsprechend isolierten Kabelverbinder (14) und ein Massereservoir (2) aufnimmt und dieses an den beiden Enden des Muffenmantels (1) durch gummielastische Dichtungsteile (3 oder 3,10) abgedichtet ist, wobei das vorgefertigte, auf das jeweilige Kabel aufschiebbare, in seiner Lage zum Muffenmantel (1) fixierte Dichtungsteil (3,10) sich zwischen dem Kabel und dem Muffenmantel (1) dichtend abstützt, dadurch gekennzeichnet, daß die beiden Dichtungsteile (3 oder 3,10) mindestens eine Dichtlippe (6,7) besitzen, die am Mantel des Kabels an der Innenseite des Muffenmantels (1) dichtend anliegt und die Dichtlippe (6,7) so angeordnet ist, daß die im Massereservoir (2) enthaltene Masse einen radialen Druck auf sie ausüben kann, und daß in das Dichtungsteil (3,10) ein erstes formstabiles Halteelement eingegossen ist, das vorzugsweise ein Haltering (4) aus Metall ist und das Halteelement eine Befestigung am Muffenmantel (1), vorzugsweise durch eine Schraubverbindung (5), ermöglicht.

2. Verbindungsmuffe nach Anspruch 1, dadurch gekennzeichnet, daß eine innere am Mantel des Kabels anliegende Dichtlippe (7) und eine äußere an der Innenseite des Muffenmantels (1) anliegende Dichtlippe (6) vorgesehen ist und beide Dichtlippen vorzugsweise im Querschnitt ein mit seiner Öffnung dem Massereservoir (2) zugewandtes V bilden und das Dichtungsteil (3) außen, zum Muffenende hin konisch abgeschrägt ist.

3. Verbindungsmuffe nach einem der vorhergehenden Ansprüche, dadurch gekennzeichnet, daß das Dichtungsteil (3) einen Innendurchmesser besitzt, der kleiner als der Außendurchmesser des Metallmantels des Massekabels (M) ist.

4. Verbindungsmuffe nach einem der vorhergehenden Ansprüche, dadurch gekennzeichnet, daß zur Verbindung eines Massekabels (M) mit einem Kunststoffkabel (K) als zweites Dichtungsteil ein aus elastomerem Material bestehender, rohrförmiger, auf den Kabelverbinder (14) aufschiebbarer, vorgefertigter Isolierkörper (10) dient, der das Massereservoir (2) gegenüber dem Kunststoffkabel (K) abdichtet, wobei das Massereservoir (2) im Bereich zwischen dem auf der Seite des Kunststoffkabels (K) angeordneten Isolierkörper (10) und dem auf der Seite des Massekabels (M) angeordneten Dichtungsteil (3) so positioniert ist, daß ein Nachtränken der Ader des Massekabels (M) erfolgt.

5. Verbindungsmuffe nach Anspruch 4, dadurch gekennzeichnet, daß der aus elastomerem Material bestehende Isolierkörper (10) einen Innendurchmesser besitzt, der jeweils kleiner als der Außendurchmesser der Isolierung (34) des Massekabels (M) auf der einen und des Kunststoffkabels (K) auf der anderen Seite ist.

6. Verbindungssmuffe nach Anspruch 4 oder 5, dadurch gekennzeichnet, daß der aus elastomerem Material bestehende Isolierkörper (10) durch Spreizung seines untermaßigen Innendurchmessers den Kabelverbinder (14) im Preßsitz umschließt und mit mindestens einer Dichtlippe (27) am Muffenmantel (1) anliegt.

7. Verbindungssmuffe nach einem der Ansprüche 4 bis 6, dadurch gekennzeichnet, daß als Kabelverbinder zum Verbinden der Leiter der beiden Kabel (M,K) ein erster Preßverbinder (14), vorzugsweise mit Sacklochbohrung, dient, der mit einem seinen Außendurchmesser soweit vergrößernden Preßverbindersteg (15) versehen ist, daß dieser eine verstärkte Abdichtung am Isolierkörper (10) bewirkt.

8. Verbindungssmuffe nach einem der vorhergehenden Ansprüche 4 bis 7, dadurch gekennzeichnet, daß in den Isolierkörper (10) eine aus leitfähigem Material bestehende Glättungshülse (11) und vorzugsweise auch ein Steuertrichter (12) integriert ist, und die Glättungshülse (11) auf den Enden der Isolierung (9,34) der beiden Kabeladern aufliegend, den ersten Preßverbinder (14) abdeckend kontaktiert.

9. Verbindungssmuffe nach einem der vorhergehenden Ansprüche 4 bis 8, dadurch gekennzeichnet, daß der Isolierkörper (10) zum Massekabel (M) hin auf der freigelegten Papierisolierung (34) etwa in der Mitte zwischen einer ersten Absetzkante (30) einer Feldbegrenzung (35) des Massekabels (M) und einer am Ende der Papierisolierung (34) des Massekabels (M) gebildeten zweiten Absetzkante (31) endet.

10. Verbindungsmuffe nach einem der vorhergehenden Ansprüche 4 bis 9, dadurch gekennzeichnet, daß das Ende des Isolierkörpers (10) konisch abgeschrägt ist und durch Anwickeln eines Papierwickels (33), vorzugsweise in einer Breite zwischen 20 mm und 100 mm, ein entsprechender Konus entsteht.

11. Verbindungssmuffe nach einem der vorhergehenden Ansprüche 4 bis 10,dadurch gekennzeichnet, daß der Außendurchmesser des Isolierkörpers (10) bis zu seiner Dichtlippe (27) wesentlich kleiner als der Innendurchmesser des Muffenmantels (1) ist, so daß sich das Massereservoir (2) bis in diesen Bereich erstrecken kann und daß eine äußere Feldbegrenzung (16), vorzugsweise aus leitfähigem Kreppapier, vom Metallmantel des Massekabels (M) bis unter die Dichtlippe (27) des Isolierkörpers (10) reicht.

12. Verbindungssmuffe nach einem der vorhergehenden Ansprüche, dadurch gekennzeichnet, daß der Muffenmantel (1) durch ein Metallrohr, vorzugsweise aus Kupfer, gebildet ist und im Bereich des Massereservoirs (2) eine Einfüllöffnung (36) für die Masse besitzt.

13. Verbindungssmuffe nach einem der vorhergehenden Ansprüche, dadurch gekennzeichnet, daß der Metallmantel (8) eines Massekabels (M) über eine erste Flachlitze (17) mit dem Muffenmantel (1) und dieser über eine zweite Flachlitze (18) durch einen zweiten Preßverbinder (20) mit Schirmdrähten (26) eines Kunststoffkabels (K) verbunden ist oder bei Potentialtrennung die zweite Flachlitze (18) durch einen dritten Preßverbinder (21) mit einer ersten isolierten Erdungslitze (23) und die Schirmdrähte (26) durch einen vierten Preßverbinder (22) mit einer zweiten isolierten Erdungslitze (24) verbunden ist, und daß vorzugsweise die beiden Erdungslitzen (23, 24) bei Bedarf außerhalb des Kabels wieder miteinander verbindbar sind.

14. Verbindungsmuffe nach einem der vorhergehenden Ansprüche, dadurch gekennzeichnet, daß das Dichtungsteil (3) und/oder der Isolierkörper (10) aus einem elastomeren Material einer Shore-A-Härte zwischen 25 und 55, vorzugsweise aus einem entsprechenden Silikonkautschuk, hergestellt ist, und daß die Dehnung des Isolierkörpers (10) zwischen 5 und 30% liegt.

15. Verbindungsmuffe nach einem der vorhergehenden Ansprüche, dadurch gekennzeichnet, daß der Muffenmantel (1), der freiliegende Bereich der beiden Dichtungsteile (3, 10) und die Anschlußenden der beiden zu verbindenden Kabel von einem Schrumpfschlauch (29) abgedeckt sind.

16. Anwendung der Verbindungsmuffe nach einem der vorhergehenden Ansprüche, dadurch gekennzeichnet, daß zur Verbindung von Mehraderkabeln, insbesondere Dreileiterkabeln, jede der Kabeladern mit einer solchen Verbindungsmuffe versehen ist.

## Claims

1. Cable splice sleeve for connecting two compound-filled cables or a compound-filled cable (M) to a plastic-insulated cable (K), in which a sleeve sheath (1) accommodates at least one appropriately insulated cable connector (14) and a compound reservoir (2), and the latter is sealed off at both ends of the sleeve sheath (1) by means of elastomeric seal parts (3 or 3, 10), the prefabricated seal part (3, 10), which can be pushed onto the respective cable and is fixed in terms of its position with respect to the sleeve sheath (1), being supported in a sealing manner between the cable and the sleeve sheath (1), characterized in that the two seal parts (3 or 3, 10) have at least one sealing lip (6, 7) which bears in a sealing manner on the sheath of the cable on the inside of the sleeve sheath (1) and the sealing lip (6, 7) is arranged in such a way that the compound contained in the compound reservoir (2) can exert a radial pressure on said sealing lip, and in that the seal part (3, 10) has cast into it a first dimensionally stable retaining element which is preferably a retaining ring (4) made of metal, and the retaining element makes possible a fastening on the sleeve sheath (1), preferably by means of a screw connection (5).

2. Cable splice sleeve according to Claim 1, characterized in that an inner sealing lip (7) bearing on the sheath of the cable and an outer sealing lip (6) bearing on the inside of the sleeve sheath (1) are provided and both sealing lips preferably form, in cross-section, a V with its opening facing the compound reservoir (2), and the seal part (3) is bevelled conically on the outside towards the end of the sleeve.

3. Cable splice sleeve according to one of the preceding claims, characterized in that the seal part (3) has an internal diameter which is smaller than the external diameter of the metal sheath of the compound-filled cable (M).

4. Cable splice sleeve according to one of the preceding claims, characterized in that, for connecting a compound-filled cable (M) to a plastic-insulated cable (K), use is made as second seal part of a prefabricated insulating element (10) which consists of elastomeric material, is tubular, can be pushed onto the cable connector (14) and seals off the compound reservoir (2) with respect to the plastic-insulated cable (K), the compound reservoir (2) being positioned, in the area between the insulating element (10) arranged on the side of the plastic-insulated cable (K) and the seal part (3) arranged on the side of the compound-filled cable (M), in such a way that reimpregnation of the core of the compound-filled cable (M) takes place.

5. Cable splice sleeve according to Claim 4, characterized in that the insulating element (10) consisting of elastomeric material has an internal diameter which is both smaller than the external diameter of the insulation (34) of the compound-filled cable (M) on the one side and smaller than that of the plastic-insulated cable (K) on the other side.

6. Cable splice sleeve according to Claim 4 or 5, characterized in that the insulating element (10) consisting of elastomeric material encloses the cable connector (14) in a force fit by spreading its undersize internal diameter and bears with at least one sealing lip (27) on the sleeve sheath (1).

7. Cable splice sleeve according to one of Claims 4 to 6, characterized in that, as cable connector for connecting the conductors of the two cables (M, K), use is made of a first compression connector (14), preferably having a blind bore, which is provided with a compression connector web (15) which enlarges its external diameter to such an extent that said web effects reinforced sealing on the insulating element (10).

8. Cable splice sleeve according to one of the preceding Claims 4 to 7, characterized in that there is integrated into the insulating element (10) a smoothing sleeve (11) consisting of conductive material, and preferably also a control funnel (12), and the smoothing sleeve (11), bearing on the ends of the insulation (9, 34) of the two cable cores, makes covering contact with the first compression connector (14).

9. Cable splice sleeve according to one of the preceding Claims 4 to 8, characterized in that the insulating element (10) ends in the direction of the compound-filled cable (M) on the exposed paper insulation (34) approximately in the centre between a first stripped-back edge (30) of a field limiting means (35) of the compound-filled cable (M) and a second stripped-back edge (31) formed at the end of the paper insulation (34) of the compound-filled cable (M).

10. Cable splice sleeve according to one of the preceding Claims 4 to 9, characterized in that the end of the insulating element (10) is conically bevelled and, by means of winding on a paper winding (33), preferably of a width between 20 mm and 100 mm, a corresponding cone is produced.

11. Cable splice sleeve according to one of the preceding Claims 4 to 10, characterized in that the external diameter of the insulating element (10), as far as its sealing lip (27), is significantly smaller than the internal diameter of the sleeve sheath (1), so that the compound reservoir (2) can extend as far as into this area, and in that an outer field limiting means (16), preferably made from conductive crepe paper, reaches from the metal sheath of the compound-filled cable (M) as far as underneath the sealing lip (27) of the insulating element (10).

12. Cable splice sleeve according to one of the preceding claims, characterized in that the sleeve sheath (1) is formed by a metal tube, preferably made of copper, and in the area of the compound reservoir (2) has a filling opening (36) for the compound.

13. Cable splice sleeve according to one of the preceding claims, characterized in that the metal sheath (8) of a compound-filled cable (M) is connected, via a first flat flexible wire (17), to the sleeve sheath (1) and this is connected, via a second flat flexible wire (18), by means of a second compression connector (20), to screening wires (26) of a plastic-insulated cable (K) or, in the case of galvanic isolation, the second flat flexible wire (18) is connected by means of a third compression connector (21) to a first insulated flexible earthing wire (23), and the screening wires (26) is [sic] connected by means of a fourth compression connector (22) to a second insulated flexible earthing wire (24), and in that the two flexible earthing wires (23, 24) can preferably be connected to each other once more, if required, outside the cable.

14. Cable splice sleeve according to one of the preceding claims, characterized in that the seal part (3) and/or the insulating element (10) is produced from an elastomeric material of a Shore A hardness between 25 and 55, preferably from a corresponding silicone rubber, and in that the expansion of the insulating element (10) is between 5 and 30%.

15. Cable splice sleeve according to one of the preceding claims, characterized in that the sleeve sheath (1), the exposed area of the two seal parts (3, 10) and the connecting ends of the two cables to be connected are covered by a heat-shrinkable tube (29).

16. Application of the cable splice sleeve according to one of the preceding claims, characterized in that, for connecting multicore cables, in particular three-core cables, each of the cable cores is provided with such a cable splice sleeve.

## Revendications

1. Manchon de liaison pour la liaison de deux câbles imprégnés ou d'un câble imprégné (M) et d'un câble en matière synthétique (K), dans le cas duquel une enveloppe de manchon (1) loge au moins un raccord de câble (14) isolé de façon correspondante et un réservoir de masse (2) et ce dernier est rendu étanche aux deux extrémités de l'enveloppe de manchon (1) par des éléments d'étanchéité (3 ou 3, 10) à élasticité de caoutchouc, l'élément d'étanchéité (3, 10) préfabriqué, qui peut être glissé sur le câble respectif et qui est fixé dans sa position par rapport à l'enveloppe de manchon (1) étant en appui de façon étanche entre le câble et l'enveloppe de manchon (1), caractérisé en ce que les deux éléments d'étanchéité (3 ou 3, 10) comportent au moins une lèvre d'étanchéité (6, 7) qui est appliquée de façon étanche sur l'enveloppe du câble, sur le côté intérieur de l'enveloppe de manchon (1) et en ce que la lèvre d'étanchéité (6, 7) est agencée de façon que la masse contenue dans le réservoir de masse (2) puisse exercer sur elle une pression radiale et en ce que, dans l'élément d'étanchéité (3, 10) il est coulé un premier élément d'arrêt de forme stable qui est de préférence une bague d'arrêt (4) en métal et en ce que l'élément d'arrêt permet une fixation à l'enveloppe de manchon (1), de préférence par une liaison à vis (5).

2. Manchon de liaison suivant la revendication 1, caractérisé en ce qu'une lèvre d'étanchéité interne (7) appliquée sur l'enveloppe du câble et une lèvre d'étanchéité externe (6) appliquée sur le côté interne de l'enveloppe de manchon (1) sont prévues et en ce que les deux lèvres d'étanchéité forment de préférence en section transversale un V tourné avec son ouverture vers le réservoir de masse (2) et en ce qu'à l'extérieur l'élément d'étanchéité (3) est chanfreiné de façon conique vers l'extrémité de manchon.

3. Manchon de liaison suivant l'une des revendications précédentes, caractérisé en ce que l'élément d'étanchéité (3) comporte un diamètre interne qui est plus petit que le diamètre externe de l'enveloppe métallique du câble imprégné (M).

4. Manchon de liaison suivant l'une des revendications précédentes, caractérisé en ce que pour la liaison d'un câble imprégné (M) et d'un câble en matière synthétique (K), il est utilisé comme second élément d'étanchéité un corps isolant (10) tubulaire, préfabriqué, constitué de matière élastomère, qui peut être glissé sur le raccord de câble (14) et qui rend étanche le réservoir de masse (2) par rapport au câble en matière synthétique (K), le réservoir de masse (2) étant positionné dans la zone entre le corps isolant (10) agencé du côté du câble en matière synthétique (K) et l'élément d'étanchéité (3) agencé du côté du câble imprégné (M), de façon qu'ait lieu une imprégnation ultérieure du conducteur du câble imprégné (M).

5. Manchon de liaison suivant la revendication 4, caractérisé en ce que le corps isolant (10) constitué de matière élastomère comporte un diamètre interne qui est respectivement plus petit que le diamètre externe de l'isolant (34) du câble imprégné (M) d'un côté et du câble en matière synthétique (K) de l'autre côté.

6. Manchon de liaison suivant la revendication 4 ou 5, caractérisé en ce que le corps isolant (10) constitué de matière élastomère entoure dans un ajustage serré, par agrandissement de son diamètre interne de dimension inférieure, le raccord de câble (14) et est appliqué par au moins une lèvre d'étanchéité (27) contre l'enveloppe de manchon (1).

7. Manchon de liaison suivant l'une des revendications 4 à 6, caractérisé en ce qu'il est utilisé comme raccord de câble pour la liaison des conducteurs des deux câbles (M, K), un premier raccord à serrer (14), de préférence à trou borgne, qui est équipé d'une âme de raccord à serrer (15) qui agrandit son diamètre externe de façon que cette dernière exerce une étanchéité renforcée sur le corps isolant (10).

8. Manchon de liaison suivant l'une des revendications 4 à 7 précédentes, caractérisé en ce qu'il est intégré dans le corps isolant (10) une douille de lissage (11), constituée de matière conductrice, et de préférence également un entonnoir de guidage (12) et en ce que la douille de lissage (11) entre en contact de façon à être appliquée sur les extrémités de l'isolant (9, 34) des deux conducteurs de câble et de façon à recouvrir le premier raccord à serrer (14).

9. Manchon de liaison suivant l'une des revendications 4 à 8 précédentes, caractérisé en ce que le corps isolant se termine au câble imprégné (M) sur l'isolant en papier (34) mis à nu, approximativement au milieu entre une première arête de découpe (30) d'un moyen de limitation de champ (35) du câble imprégné (M) et une seconde arête de découpe (31) formée à l'extrémité de l'isolant en papier (34) du câble imprégné (M).

10. Manchon de liaison suivant l'une des revendications 4 à 9 précédentes, caractérisé en ce que l'extrémité du corps isolant (10) est chanfreinée de façon conique et en ce qu'il y a un cône correspondant par bobinage d'un enroulement de papier (33), de préférence d'une largeur entre 20 mm et 100 mm.

11. Manchon de liaison suivant l'une des revendications 4 à 10 précédentes, caractérisé en ce que le diamètre externe du corps isolant (10) jusqu'à sa lèvre d'étanchéité (27) est sensiblement plus petit que le diamètre interne de l'enveloppe de manchon (1), de sorte que le réservoir de masse (2) puisse s'étendre jusque dans cette zone et de sorte qu'un moyen de limitation de champ externe (16), de préférence en papier crêpe conducteur, va de l'enveloppe métallique du câble imprégné (M) jusqu'en dessous de la lèvre d'étanchéité (27) du corps isolant (10).

12. Manchon de liaison suivant l'une des revendications précédentes, caractérisé en ce que l'enveloppe de manchon (1) est formée par un tube métallique, de préférence en cuivre, et comporte pour la masse, dans la zone du réservoir de masse (2), un orifice de remplissage (36).

13. Manchon de liaison suivant l'une des revendications précédentes, caractérisé en ce que l'enveloppe métallique (8) d'un câble imprégné (M) est reliée par un premier toron plat (17) à l'enveloppe de manchon (1) et celle-ci est reliée par un second toron plat (18), à travers un second raccord à serrer (20), à des fils d'écran (26) d'un câble en matière synthétique (K) ou bien, dans le cas d'une séparation de potentiel, le second toron plat (18) est relié à travers un troisième raccord à serrer (21) à un premier toron de masse isolé (23) et les fils d'écran (26) sont reliés par un quatrième raccord à serrer (22) à un second toron de masse isolé (24), et en ce que de préférence les deux torons de masse (23, 24) peuvent être reliés à nouveau l'un à l'autre, en cas de besoin, à l'extérieur du câble.

14. Manchon de liaison suivant l'une des revendications précédentes, caractérisé en ce que l'élément d'étanchéité (3) et/ou le corps isolant (10) sont fabriqués en une matière élastomère d'une dureté Shore A entre 25 et 55, de préférence en un caoutchouc de silicone correspondant, et en ce que l'expansion du corps isolant (10) est comprise entre 5 et 30 %.

15. Manchon de liaison suivant l'une des revendications précédentes, caractérisé en ce que l'enveloppe de manchon (1), la zone libre des deux éléments d'étanchéité (3, 10) et les extrémités de raccordement des deux câbles à relier sont recouvertes d'une gaine rétractable (29).

16. Utilisation du manchon de liaison suivant l'une des revendications précédentes, caractérisée en ce que pour la liaison de câbles à plusieurs conducteurs, en particulier de câbles à trois conducteurs, chacun des conducteurs de câble est muni d'un manchon de liaison de ce genre.
